# EUROPÄISCHE PATENTANMELDUNG

(11) **EP 0 856 950 A2**
(43) Veröffentlichungstag der Anmeldung: **05.08.1998**
(21) Anmeldenummer: 98100340.3
(22) Anmeldetag: 10.01.1998
(51) Int. Cl.: H04B 1/38, H04M 11/04

(54) **Drahtloses akustisches Raumüberwachungssystem**

(30) Priorität: 30.01.1997 DE 19703325
(71) Anmelder: Hagenuk Telecom GmbH, 24118 Kiel (DE)
(72) Erfinder: Hörnke, Kay, Dipl.-Ing., 24242 Felde (DE)
(74) Vertreter: Hansmann, Dierk, Dipl.-Ing.

(57) **Zusammenfassung**

Es wird ein drahtloses akustisches Raumüberwachungssystem, z.B. für Baby- oder Kinderzimmer, beschrieben, das sich insbesondere dadurch auszeichnet, daß ein drahtlos betreibbares Telekommunikationsendgerät für einen zu überwachenden Raum, ein dem Endgerät zugeordnetes Empfangsgerät, sowie eine durch Auswahl einer Betriebsart "Raumüberwachung" aktivierbare Schalteinrichtung in dem Endgerät zur akustisch gesteuerten Verbindung des Endgerätes mit dem Empfangsgerät vorgesehen ist.

## Beschreibung

Die Erfindung betrifft ein drahtloses akustisches Raumüberwachungssystem, mit einem zur Sprachübertragung vorgesehenen Telekommunikationsendgerät für einen zu überwachenden Raum, insbesondere für ein Baby- oder Kinderzimmer, zur akustisch gesteuerten Verbindung mit einem Empfangsgerät.

Zur akustischen Überwachung von Baby- oder Kinderzimmern sind verschiedene Systeme bekannt. Hierzu gehören u.a. drahtlose, über das CB-Funknetz betriebene Babyphone. Bei einem räumlich eng begrenzten Nutzungsbereich werden auch drahtgebundene Babyphone verwendet, die über das Stromnetz miteinander verbunden sind. Diese Systeme überwachen den Geräuschpegel in einem Raum und aktivieren ein zugeordnetes, bei einer überwachenden Person installiertes Empfangsgerät, wenn der Geräuschpegel (z.B. durch Schreien oder Rufen des Kindes) eine - im allgemeinen einstellbare - Schwelle erreicht. Nachteilig hierbei ist jedoch, daß diese Systeme relativ aufwendig und teuer sind.

Aus der DE-G 91 06 916.5 ist ein "Raumüberwachungsgerät, insbesondere Babyfon" bekannt, das eine Telefonwählanlage aufweist, die mit einem Mikrofon verbunden ist. Die Telefonwählanlage ist dabei mit einem vorprogrammierbaren Rufnummerngeber versehen, der von dem Mikrofon bei einem Empfang von Geräuschen aktiviert wird und bestimmte Rufnummern anwählt.

Ein Nachteil dieses Gerätes ist jedoch darin zu sehen, daß die Alarmgebung über das öffentliche Telefonnetz erfolgt, was in vielen Fällen unerwünscht oder unnötig ist, erhebliche Kosten verursachen kann und den in den meisten Haushalten einzigen Telefonanschluß belegt.

Ähnliches gilt auch für das in der DE-G 93 20 041.2 beschriebene "Alarmtelefon", das bei einer Alarmierung automatisch eingespeicherte Alarmnummern z.B. bei der Polizei o.ä. anwählt. Sobald der Angewählte seinen Hörer abnimmt, übermittelt eine synthetische Stimme zur Identifizierung die Anschlußnummer des anrufenden Alarmtelefons. Anschließend werden Mikrofone, die in dem zu überwachenden Raum installiert sind, eingeschaltet, so daß man die verdächtigen Geräusche mithören kann.

Auch bei diesem Gerät ist jedoch nachteilig, daß bei einer Alarmierung stets eine Amtsleitung belegt wird, und daß es außerdem relativ teuer ist.

Der Erfindung liegt deshalb die Aufgabe zugrunde, ein drahtloses akustisches Raumüberwachungssystem der eingangs genannten Art zu schaffen, das wesentlich einfacher und kostengünstiger zu realisieren und ohne Belegung einer Amtsleitung betreibbar ist, ohne daß man jedoch bei diesem System im Bedarfsfall auf die Alarmübermittlung über die Amtsleitung verzichten muß.

Gelöst wird diese Aufgabe bei einem drahtlosen akustischen Raumüberwachungssystem dadurch, daß das Telekommunikationsendgerät ein Mobilteil und das Empfangsgerät eine Basisstation eines schnurlosen Telefons ist, wobei das Mobilteil ein Mikrofon und eine an dieses angeschlossene Schalteinrichtung aufweist, die in eine Betriebsart "Raumüberwachung" schaltbar ist, in der diese bei Überschreiten eines akustischen Eingangspegels eine Verbindungsaufnahme mit der Basisstation auslöst.

Ein Vorteil des erfindungsgemäßen Raumüberwachungssystems besteht in seiner universellen Anwendbarkeit. Das System arbeitet auf der Basis einer in vielen Anwendungsumgebungen (Heimbereich, Pflegeeinrichtungen, Kindertagesstätten usw.) vorhandenen schnurlosen Telekommunikationsanlage, die entweder durch Nachrüsten mit der genannten Schalteinrichtung oder durch Austausch des betreffenden Mobilteils zu einem erfindungsgemäßen Raumüberwachungssytem umgerüstet werden kann.

Dies hat zur Folge, daß die Anschaffung sehr kostengünstig ist. In beiden Fällen bleibt die Funktionalität als Telekommunikationsanlage in vollem Umfang erhalten.

Da bei einer Alarmgebung keine Amtsleitung belegt wird, ist auch der Betrieb des erfindungsgemäßen Raumüberwachungssystems wesentlich kostengünstiger. Trotzdem muß man nicht auf die Möglichkeit verzichten, im Bedarfsfalle eine Alarmgebung über das öffentliche Telefonnetz übertragen lassen zu können. Dies kann in einfacher Weise dadurch geschehen, daß die in den meisten Basisstationen vorhandene Funktion "Anrufweiterschaltung" aktiviert und eine gewünschte Ziel-Rufnummer eingegeben wird.

Eine Alarmierung über das öffentliche stationäre oder sogar über ein mobiles Telefonnetz ist insbesondere für Personen interessant, die sich an wechselnden Orten aufhalten und dabei ein Funktelefon mitführen.

In diesem Fall ist auch eine Verbindung z.B. zu privaten Diensten, die mit der Überwachung beauftragt werden, möglich.

Vorteilhafte Ausgestaltungen und Weiterbildungen der Erfindung werden in den Unteransprüchen beschrieben.

Die Schalteinrichtung in dem Mobilteil ist vorzugsweise in einer Betriebsart "Abhör- modus" betreibbar ist, in der bei einem Anruf an der Basisstation ein Abhören des überwachten Raumes über das Mobilteil möglich ist.

Die Schalteinrichtung in dem Mobilteil weist vorzugsweise einen einstellbaren Schwellenwertschalter auf, mit dem ein Mikrofonpegel einstellbar ist, bei dem das Mobilteil mit der Basisstation verbunden wird.

Die Verbindung zwischen dem Mobilteil und der Basisstation ist nach Ablauf einer vorbestimmten Zeitdauer durch das Mobilteil vorzugsweise automatisch beendbar.

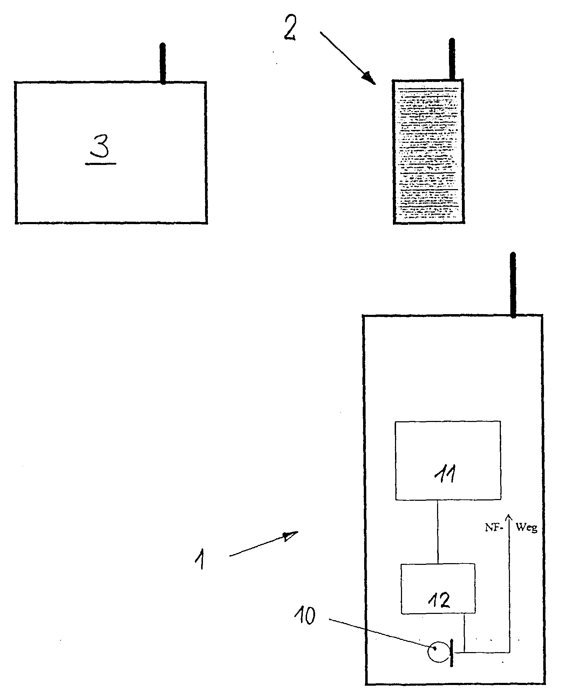

Weitere Einzelheiten, Merkmale und Vorteile der Erfindung ergeben sich aus der nachfolgenden Beschreibung einer bevorzugten Ausführungsform anhand der Zeichnung. Die einzige Figur zeigt ein Blockschaltbild dieser Ausführungsform.

Eine solche Ausführung umfaßt ein drahtloses Telekommunikationsendgerät in Form eines Mobilteils 1, sowie eines Funktelefons 2 und eine Basisstation 3. Das Mobilteil 1 weist neben einem üblicherweise vorhandenen Mikrofon 10 sowie einer zur Ablaufsteuerung dienenden Prozessoreinheit 11 zusätzlich eine Schalteinrichtung 12 auf, die im wesentlichen ein Sprachschaltermodul mit Schwellenwertschalter darstellt. Die Schalteinrichtung 12 ist mit ihrem Eingang an das Mikrofon 10 und mit ihrem Ausgang an die Prozessoreinheit 11 angeschlossen.

Die Prozessoreinheit 11 ist durch ein Programmteil bzw. eine Softwareanpassung so ergänzt, daß ein wahlweiser Betrieb des Mobilteils 1 entweder in einer Betriebsart "Raumüberwachung" möglich ist, wenn es in einem zu überwachenden Raum installiert ist, oder als normales Telefon verwendet werden kann.

In der Betriebsart "Raumüberwachung" werden die vom Mikrofon 10 erzeugten Spannungssignale in der Schalteinrichtung 12 ausgewertet. Über den Schwellwertschalter, dessen Schaltpegel vorzugsweise durch die Prozessoreinheit 11 gesteuert einstellbar ist, wird bei Anliegen eines den Schaltpegel erreichenden Mikrofon-Spannungsssignals ein digitales Ausgangssignal zu der Prozessoreinheit 11 führt.

Dieses Ausgangssignal hat zur Folge, daß die Prozessoreinheit 11 eine Verbindung zu dem zuvor mit dem Mobilteil 1 ausgewählten Empfangsgerät herstellt, bei dem es sich um das Funktelefon 2 oder die Basisstation 3 handeln kann. Die Basisstation 3 ist vorzugsweise mit einer Lauthör-Durchsagefunktion (Intercom) ausgestattet, so daß die übertragenen Geräusche (z.B. Rufen des Kindes) hörbar wiedergegeben werden.

Eine Verbindung zu dem zweiten Funktelefon 2 ist insbesondere dann sinnvoll, wenn sich die überwachende Person z.B. an wechselnden Orten aufhält und das Funktelefon 2 mitführt. In diesem Fall ist eine Überwachung und ein Abhören des Raumes auch aus großer Entfernung möglich, solange sich das zweite Funktelefon 2 im Versorgungsbereich einer Funkzelle befindet. Außerdem ist es möglich, eine Textmeldung zu übertragen und auf einem Display des zweiten Funktelefons 2 anzuzeigen.

Diese beiden Verbindungen sind mit den üblichen Funktionen bei Funktelefonen (z.B. Anrufweiterschaltung an eine gewählte Rufnummer) sowie die oben genannte Softwareanpassung alternativ auswählbar.

Mit diesen Funktionen ist natürlich auch die Schaltung einer Amtsverbindung, sowie von Verbindungen zu anderen Basisstationen, wie z.B. EUROPHON XL, durch Programmierung der entsprechenden Rufnummer möglich.

Bei einer ausschließlichen Anwendung des Raumüberwachungssytems innnerhalb eines Hauses oder einer Wohnung kann anstelle des ersten Funktelefons 1 als drahtloses Telekommunikationsendgerät auch ein Telefon-Handgerät einer schnurlosen Endeinrichtung verwendet werden, wobei das Handgerät mit der Schalteinrichtung 12 (Sprachschaltermodul mit Schwellenwertschalter) und dem Programmteil oder der Softwareanpassung für die Betriebsart "Raumüberwachung" ergänzt ist.

In diesem Fall wird bei Erreichen der vorbestimmten Mikrofonausgangsspannung eine Verbindung zu der zugeordneten Basisstation 3 der schnurlosen Endeinrichtung hergestellt und das Mikrofonsignal durch Aktivierung der Lauthör-Durchsagefunktion (Intercom) wiedergegeben.

Im allgemeinen ist das erste Funktelefon 1 bzw. das schnurlose Handgerät in der Betriebsart "Raumüberwachung" nicht anrufbar, d.h. der Tonruf ist deaktiviert. Die Bedienoberfläche wird dazu mit der Tastenkombination, mit der diese Betriebsart aktiviert wird, gesperrt. Nach einem Verbindungsaufbau werden die Sprechwege vorzugsweise nur für eine eingestellte Zeitdauer durchgeschaltet (Hörweg gemutet). Diese Zeitdauer wird zwar bei wiederholtem Auftreten von den Schwellenwert erreichenden Geräuschpegeln durch die Schalteinrichtung nachgetriggert, sie sollte jedoch auf eine maximale Zeitdauer, die einstellbar ist oder in Abhängigkeit von einer Orts- oder Fernverbindung gewählt wird, begrenzt sein.

Zusätzlich ist es auch möglich, in der Betriebsart "Raumüberwachung" eine Betriebsart "Abhörmodus" vorzusehen, in der das Endgerät anrufbar gehalten wird, wobei diese Anrufbarkeit vorzugsweise programmierbar ist. Die überwachende Person hat dadurch die Möglichkeit, das Endgerät von sich aus anzurufen und den Raum abzuhören, nachdem sie sich z.B. durch ein DTMF-Codesignal als berechtigt ausgewiesen hat.

Um die durch die üblicherweise verwendeten Akkumulatoren begrenzte Betriebsdauer zu erhöhen, bietet es sich schließlich an, für das in dem zu überwachenden Raum installierte Endgerät eine Ladeeinrichtung vorzusehen.

Die Anwendbarkeit des erfindungsgemäßen Raumüberwachungssystems ist natürlich nicht auf Kinderzimmer beschränkt. Es ist auch denkbar, das System z.B. als akustische Alarmanlage zu verwenden, wenn der Schwellenwert entsprechend niedrig eingestellt und die Schalteinrichtung gegebenenfalls durch einen Mirofonvorverstärker ergänzt wird.

## Patentansprüche

1. Drahtloses akustisches Raumüberwachungssystem, mit einem zur Sprachübertragung vorgesehenen Telekommunikationsendgerät für einen zu überwachenden Raum, insbesondere für ein Baby- oder Kinderzimmer, zur akustisch gesteuerten Verbindung mit einem Empfangsgerät, dadurch gekennzeichnet, daß das Telekommunikationsendgerät ein Mobilteil (1) und das Empfangsgerät eine Basisstation (3) eines schnurlosen Telefons ist, wobei das Mobilteil (1) ein Mikrofon (10) und eine an dieses angeschlossene Schalteinrichtung (12) aufweist, die in eine Betriebsart "Raumüberwachung" schaltbar ist, in der diese bei Überschreiten eines akustischen Eingangspegels eine Verbindungsaufnahme mit der Basisstation (3) auslöst.

2. Raumüberwachungssystem nach Anspruch 1, dadurch gekennzeichnet, daß die Schalteinrichtung (12) in dem Mobilteil in einer Betriebsart "Abhörmodus" betreibbar ist, in der bei einem Anruf an der Basisstation (3) ein Abhören des überwachten Raumes über das Mobilteil (1) möglich ist.

3. Raumüberwachungssystem Anspruch 1 oder 2, dadurch gekennzeichnet, daß die Schalteinrichtung (12) in dem Mobilteil (1) einen einstellbaren Schwellenwertschalter aufweist, mit dem ein Mikrofonpegel einstellbar ist, bei dem das Mobilteil (1) mit der Basisstation (3) verbunden wird.

4. Raumüberwachungssystem nach einem der vorhergehenden Ansprüche, dadurch gekennzeichnet, daß die Verbindung zwischen dem Mobilteil (1) und der Basisstation (3) nach Ablauf einer vorbestimmten Zeitdauer durch das Mobilteil (1) automatisch beendbar ist.
